# EUROPEAN PATENT SPECIFICATION

(11) **EP 3 715 678 B1**
(45) Date of publication and mention of the grant of the patent: **27.04.2022**
(21) Application number: 19845687.3
(22) Date of filing: 29.01.2019
(51) Int. Cl.: F16J 9/26, F16J 9/16, F16J 15/10, F16J 15/3212, F16K 1/226, F16J 15/3272, F16J 15/328

(54) **METHOD FOR MANUFACTURING SEAL RING, AND SEAL RING**
VERFAHREN ZUR HERSTELLUNG EINES DICHTUNGSRINGS UND DICHTUNGSRING
PROCÉDÉ DE FABRICATION DE BAGUE D'ÉTANCHÉITÉ, ET BAGUE D'ÉTANCHÉITÉ

(43) Date of publication of application: 30.09.2020
(73) Proprietor: TPR CO., LTD., Tokyo 100-0005 (JP)
(72) Inventor: HAMA, Masahide, Chiyoda-ku, Tokyo 100-0005 (JP); KOYAMA, tetsuji, Chiyoda-ku, Tokyo 100-0005 (JP); OGA, Teppei, Chiyoda-ku, Tokyo 100-0005 (JP)
(74) Representative: Gill Jennings & Every LLP
(86) International application number: PCT/JP2019/003005
(87) International publication number: WO 2020/157834

(56) References cited:
- JP-A- H1 163 226
- JP-A- 2017 180 726
- JP-A- 2019 002 489
- JP-U- H0 656 565
- JP-U- S57 194 956

## Description

### Technical Field

The present invention relates to a manufacturing method for a seal ring, and a seal ring.

### Background Art

For example, in an internal combustion engine of a vehicle, in order to control a flow rate of a fluid such as gas, a butterfly valve is arranged in a flow passage in some cases. A seal ring is fitted into a mounting groove formed on an outer peripheral side of the butterfly valve, and the seal ring ensures airtightness while the butterfly valve is being closed. Further, while the butterfly valve is being opened, the seal ring, except for part of the seal ring, comes into a state of not being in contact with an inner wall of the flow passage. Thus, in order to prevent the seal ring from falling out of the mounting groove, the seal ring is configured to have elasticity so that increase in its diameter is suppressed. Further, also in a sliding portion of an automatic transmission of the vehicle, in order to prevent a fluid such as lubricating oil from leaking to an outside, the seal ring is used in some cases.

Such seal rings are disclosed in, for example, Patent Literature 1 to Patent Literature 5

. In Patent Literature 1, the following configuration is disclosed. Specifically, a through hole is formed in a metal ring, and part of a plastic ring is inserted into the through hole, to thereby integrate the metal ring and the plastic ring with each other. Further, in Patent Literature 2, there is disclosed a configuration in which an elastic member is covered with an outer ring and an inner ring pair. Further, in Patent Literature 3, there is disclosed a seal ring of an endless type including an outer peripheral member made of a resin material and an inner peripheral member made of an elastic material, which are integrated with each other. Further, in Patent Literature 4, there is disclosed a configuration in which a ring made of a metal material is inserted into a substantially center portion in a cross section of a sealing member, which is made of a synthetic resin material, and has a rectangular cross section.

In Patent literature 5 there is disclosed a further manufacturing method for a seal ring and corresponding seal ring.

### Citation List

### Patent Literature

[PTL 1] JP 55-16526 U2
[PTL 2] JP 62-20262 U1
[PTL 3] JP 2010-181018 A
[PTL 4] JP 01-58863 U1
[PTL 5] JP Hll 63226 A

### Summary of Invention

### Technical Problem

Incidentally, in the configuration disclosed in Patent Literature 1, the metal ring is exposed to the outside. Consequently, depending on an environment in which the seal ring is set, the metal ring is liable to be corroded. This point is similar to the configuration disclosed in Patent Literature 2.

Further, in many cases, the seal ring cannot be mounted to a mounting object unless the seal ring has an abutment joint. In addition, for example, for the butterfly valve to be arranged in the flow passage of the internal combustion engine, reduction of a flow amount of the gas leaking from the abutment joint of the seal ring is required. Such abutment joint is not a simple and straight type, but has a special shape called a gas-tight type. The abutment joint having the special shape is not disclosed in Patent Literature 1 and Patent Literature 2.

Further, in the configuration disclosed in Patent Literature 3, the seal ring is of an endless type as described above, and hence has no abutment joint. Accordingly, as a matter of course, the seal ring does not have the abutment joint having a special shape like the gas-tight type. Further, the configuration disclosed in Patent Literature 4 is formed by simple insert molding, and hence whether the seal ring is the endless type or the type having the abutment joint is not described.

The present invention has been made in view of the above-mentioned circumstances, and has an object to provide a manufacturing method for a seal ring, and a seal ring, which has an abutment joint (abutment joint of a gas-tight type) having an overlapped portion at least in an axial direction of the seal ring, and allows to include a metallic tension ring therein.

### Solution to Problem

In order to achieve the above-mentioned object, according to a first embodiment of the present invention, there is provided a manufacturing method for a seal ring having a resin ring body which is made of a resin and includes a tension ring made of metal in the resin ring body, the manufacturing method including: a base ring forming step of forming a base ring which is made of a resin and includes an abutment joint with an overlapped portion between one end-side engagement portion on one end side of circumferential direction and another end-side engagement portion on another end side of the circumferential direction, the overlapped portion being overlapping at least in an axial direction of the base ring; a cavity arranging step of arranging the base ring in a cavity of a die; a tension ring setting step of setting the metallic tension ring in a ring arrangement portion of the base ring, the tension ring having a gap portion in a portion corresponding to the one end-side engagement portion and the another end-side engagement portion; and a sealing step of forming a cover portion which forms the resin ring body together with the base ring through pouring of a liquid resin into the cavity and a dropout preventing portion which is configured to prevent the base ring and the cover portion from being peeling off each other, the dropout preventing portion being formed between the base ring and the cover portion.

In addition to the above described invention, wherein the ring arrangement portion includes a recessed fitting groove recessed from one end surface of the base ring, and wherein, in the tension ring setting step, the tension ring is set in the recessed fitting groove in a state in which a height of the tension ring is lower than the one end surface.

In addition to the above described invention, wherein the dropout preventing portion includes: a locking window portion which is formed in the base ring and has a circumferential length being present between a bottom wall of the recessed fitting groove and one end surface of the base ring and being a cutout portion cutting out a peripheral wall adj acent to the recessed fitting groove, the circumferential length increasing as going from the one end surface of the base ring toward the bottom wall of the recessed fitting groove; and a locking projection formed in the cover portion and fitted into the locking window portion, and wherein, in the sealing step, the locking projection to be fitted into the locking window portion is formed.

In addition to the above described invention, wherein an abutment joint engagement portion formed of the one end-side engagement portion and the another end-side engagement portion is provided so as to be continuous with both end sides of a ring body portion of the base ring, the ring body portion being a portion where the recessed fitting groove is formed, wherein the abutment joint is defined between the one end-side engagement portion and the another end-side engagement portion, and wherein, in the cavity arranging step, one end-side projecting portion formed on the one end-side engagement portion is fitted into another end-side recessed portion formed in the another end-side engagement portion, and another end-side projecting portion formed on the another end-side engagement portion is fitted into one end-side recessed portion formed in the one end-side engagement portion.

According to a second aspect of the present invention, a seal ring having a resin ring body which is made of resin and includes a tension ring made of metal in the resin ring body, the seal ring, including:, a base ring being made of a resin, forming the resin ring body, and including an abutment j oint of a gas-tight type between one end-side engagement portion on one end side of circumferential direction and another end-side engagement portion on another end side of the circumferential direction, the tension ring made of metal, the tension ring having a gap portion in a portion corresponding to the one end-side engagement portion and the another end-side engagement portion, and being arranged in a ring arrangement portion of the base ring, a cover portion forming the resin ring body together with the base ring, and being prevented from being peeling off from the base ring owing to presence of a dropout preventing portion between the base ring and the cover portion.

In addition to the above described invention, wherein the ring arrangement portion includes a recessed fitting groove recessed from one end surface of the base ring, and wherein the tension ring is set in a state in which a height of the tension ring is lower than the one end surface.

In addition to the above described invention, wherein the dropout preventing portion includes: a locking window portion which is formed in the base ring and has a circumferential length being present between a bottom wall of the recessed fitting groove and one end surface of the base ring and being a cutout portion cutting out a peripheral wall adj acent to the recessed fitting groove, the circumferential length increasing as going from the one end surface of the base ring toward the bottom wall of the recessed fitting groove; and a locking projection formed in the cover portion and fitted into the locking window portion.

In addition to the above described invention, wherein an abutment joint engagement portion formed of the one end-side engagement portion and the another end-side engagement portion is provided so as to be continuous with both end sides of a ring body portion of the base ring , the ring body portion being formed with the recessed fitting groove, wherein the abutment joint is defined between the one end-side engagement portion and the another end-side engagement portion, wherein the one end-side engagement portion includes one end-side projecting portion and one end-side recessed portion, wherein the another end-side engagement portion includes another end-side projecting portion and another end-side recessed portion, and wherein the one end-side projecting portion is fitted into the another end-side recessed portion, and the another end-side projecting portion is fitted into the one end-side recessed portion.

### Advantageous Effects of Invention

According to the present invention, there may be provided a manufacturing method for a seal ring and a seal ring, which has an abutment joint (abutment joint of a gas-tight type) having overlapped portions at least in an axial direction of the seal ring, and allows to include a metallic tension ring therein.

### Brief Description of Drawings

FIG. 1 is a perspective view for illustrating a configuration of a seal ring according to one embodiment of the present invention.
FIG. 2 is a perspective view for illustrating a shape of a base ring forming the seal ring illustrated in FIG. 1.
FIG. 3 is a perspective view for illustrating a second configuration example of the base ring.
FIG. 4 is a perspective view for illustrating a modification example of the second configuration example of the base ring.
FIG. 5 is a perspective view for illustrating a third configuration example of the base ring.
FIG. 6 is a perspective view for illustrating a fourth configuration example of the base ring.
FIG. 7 is a sectional view for illustrating a configuration of a vicinity of a bottom wall boss portion of the base ring illustrated in FIG. 6.
FIG. 8 is a perspective view for illustrating a fifth configuration example of the base ring.
FIG. 9 is a sectional view for illustrating a configuration of a vicinity of a hole portion of the base ring illustrated in FIG. 8.
FIG. 10 is an enlarged partial perspective view for illustrating a configuration of a vicinity of an abutment joint of the seal ring illustrated in FIG. 1 (first configuration example of the vicinity of the abutment joint).
FIG. 11 is a view for illustrating a modification example of the configuration of the vicinity of the abutment joint.
FIG. 12 is a view for illustrating another modification example of the configuration of the vicinity of the abutment joint.
FIG. 13 is a view for illustrating still another modification example of the configuration of the vicinity of the abutment joint.
FIG. 14 is a view for illustrating still another modification example of the configuration of the vicinity of the abutment joint.
FIG. 15 is a perspective view for illustrating a configuration of a die for manufacturing the seal ring illustrated in FIG. 1, and a state in which the base ring is inserted into a cavity of the die.
FIG. 16 is a perspective view for illustrating a state in which a tension ring is fitted into a recessed fitting groove of the base ring.
FIG. 17 is a partial enlarged view for illustrating a vicinity of a locking window portion in a state in which the tension ring is fitted into the recessed fitting groove illustrated in FIG. 16.
FIG. 18 is a perspective view for illustrating a state in which a cover portion is formed in the die illustrated in FIG. 15.
FIG. 19 is a partial enlarged view for illustrating the vicinity of the locking window portion in the state in which the cover portion is formed as illustrated in FIG. 18.

### Description of Embodiments

Now, description is made of a seal ring 10 and a manufacturing method for the seal ring 10 according to one embodiment of the present invention with reference to the drawings. In the following description, an axial direction of a base ring 30 is defined as a Z direction. Further, in the axial direction (Z direction), a bottom wall 33 side of the base ring 30 is defined as a lower side (Z2 side), and an opposite side on which an upper end surface 31a is located is defined as an upper side (Z1 side).

### [1. Regarding Overall Configuration of Seal Ring 10]

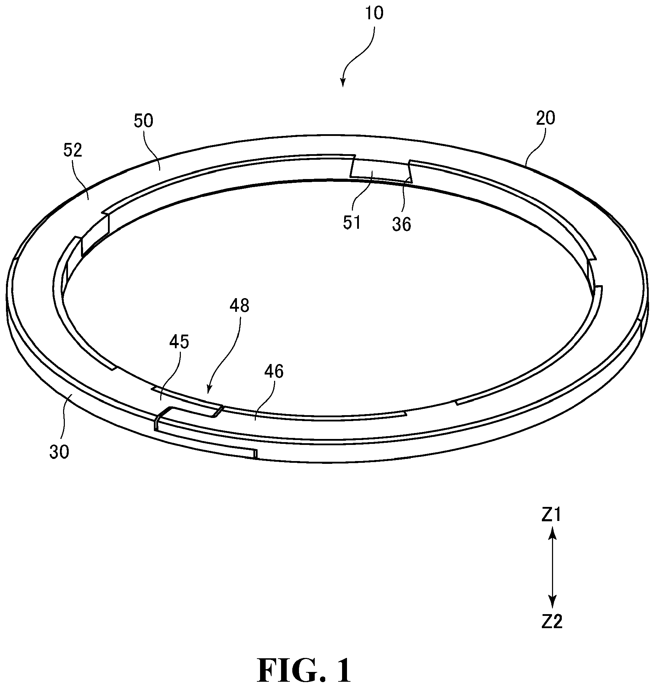

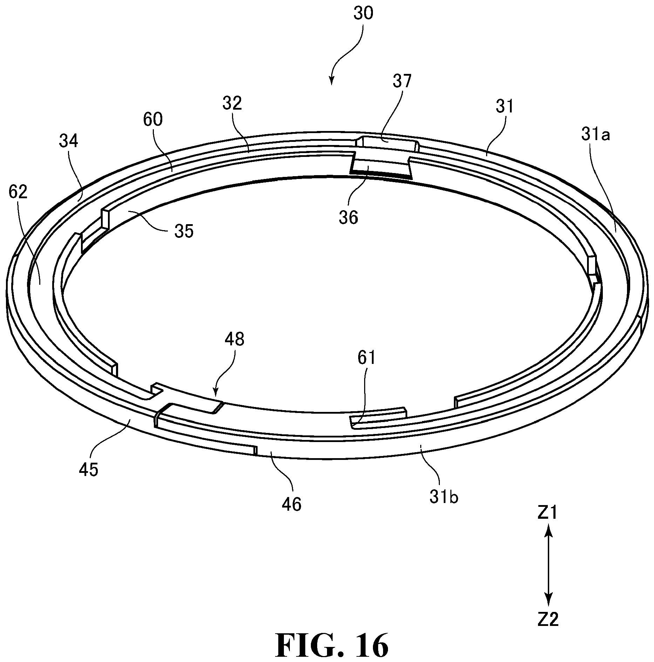

FIG. 1 is a perspective view for illustrating a configuration of the seal ring 10. The seal ring 10 illustrated in FIG. 1 includes a resin ring body 20 and a tension ring 60 (see FIG. 16). Of those components, the resin ring body 20 includes the base ring 30 and a cover portion 50.

### [2. Regarding Manufacturing Method for Seal Ring 10]

Now, description is made of a manufacturing method for a seal ring 10. For description of the manufacturing method for the seal ring 10, specific configurations of the base ring 30, the cover portion 50, and the tension ring 60 are also described.

### (1) Production of Base Ring 30 (Base Ring Forming Step)

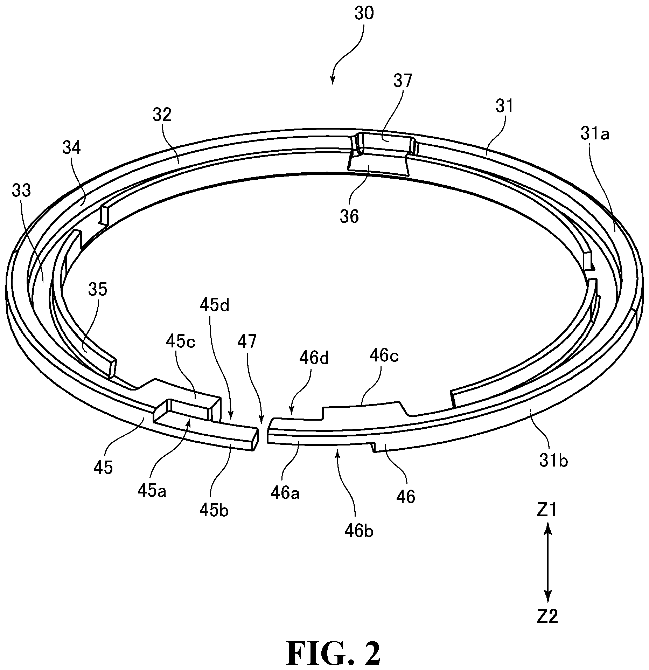

FIG. 2 is a perspective view for illustrating a shape of the base ring 30. For production of the seal ring 10, the base ring 30 as illustrated in FIG. 2 is produced by, for example, injection molding. In the injection molding for manufacturing the base ring 30, for example, polyamide (PA), a fluorine resin (e.g., polytetrafluoroethylene (tetrafluoride) (PTFE), a tetrafluoroethylene-perfluoroalkyl vinyl ether copolymer (PFA), or a tetrafluoroethylene-ethylene copolymer (ETFE)) and an alloy material thereof, or a superengineering plastic typified by a liquid crystal polymer (LCP), polyimide (PI), polyether ketone (PEK), polyaryl ether ketone (PAEK), polyether ketone ether ketone ketone (PEKEKK), polyether ether ketone (PEEK), or polyphenylene sulfide (PPS) may be used, and polybenzimidazole (PBI) having higher heat resistance may preferably be used. Those thermoplastic resins may be subjected to injection molding, the abutment joint 47 having a complex shape, such as a gas tight shape, can easily be formed.

The base ring 30 includes a ring body portion 31, one end-side engagement portion 45, and another end-side engagement portion 46. Further, the base ring 30 has a split ring shape having the abutment joint 47 formed at one portion in a circumferential direction thereof. The abutment joint 47 is formed between the one end-side engagement portion 45 and the another end-side engagement portion 46. That is, when the base ring 30 is produced, the base ring 30 is formed by pouring a liquid resin into a die (not shown) that has a cavity formed into a shape conforming to the base ring 30. At this time, the base ring 30 is formed under a state in which the abutment joint 47 is fully opened.

The ring body portion 31 is a region of the base ring 30 excluding the one end-side engagement portion 45 and the another end-side engagement portion 46, and is a region occupying most of the ring shape of the base ring 30. A recessed fitting groove 32 is formed in the ring body portion 31 along an overall length thereof so as to be recessed from an upper end surface 31a of the ring body portion 31. The recessed fitting groove 32 is a recessed portion into which the tension ring 60 to be described later is fitted. The recessed fitting groove 32 is surrounded on three sides by the bottom wall 33 located on another side in the axial direction (lower side; Z2 side), an outer peripheral wall 34 located on a radially outer side of the ring body portion 31, and an inner peripheral wall 35 located on a radially inner side thereof.

Here, as illustrated in FIG. 2, locking window portions 36 corresponding to part of a dropout preventing portion are formed in the inner peripheral wall 35 (corresponding to a peripheral wall) . The locking window portions 36 are portions configured to allow entry of the locking projections 51 of the cover portion 50 when the cover portion 50 to be described later is formed. The locking window portions 36 are cutout portions cutting out the inner peripheral wall 35 so that circumferential lengths of the cutout portions become longer as it goes to the lower side (Z2 side) . Thus, when the locking projections 51 corresponding to part of the dropout preventing portion are formed, the locking window portions 36 exert a function of preventing detachment of the cover portion 50 toward the upper side (Z1 side).

Here, to form the locking window portions 36, sliding cores conforming to shapes of the locking window portions 36 are placed in a cavity 101 of the die. After the liquid resin is poured into the die, and then is cured, the sliding cores are slid toward the radially inner side. Then, the locking window portions 36 as illustrated in FIG. 2 are formed.

Note that, in FIG. 2, the base ring 30 having five locking windowportions 36 is illustrated. However, any number of the locking window portions 36 may be formed. For example, the locking window portion 36 may be formed at only one portion in the circumferential direction of the inner peripheral wall 35, but it is preferred that the locking window portions 36 be formed at two or more portions. Further, when the locking window portions 36 are formed at two portions of the inner peripheral wall 35, it is preferred that the locking window portions 36 be formed, for example, at an interval of 180 degrees in the circumferential direction of the inner peripheral wall 35. Further, when the locking window portions 36 are formed at three or more portions of the inner peripheral wall 35, it is preferred that an interval between the two freely-selected locking window portions 36 be equal to or smaller than 180 degrees.

Here, when the seal ring 10 is assembled to another member, the seal ring 10 is expanded or contracted reversely. At this time, stress is concentrated at a position away from the abutment joint 47 by 180 degrees in the circumferential direction of the inner peripheral wall 35 (position opposite to the abutment joint 47 in the circumferential direction of the inner peripheral wall 35) when the above-mentioned expanding or contracting operation of the seal ring 10 is performed. When the locking window portion 36 is formed at the position at which the stress is concentrated, the cover portion 50 is sometimes detached from the base ring 30.

In order to reliably prevent such detachment, there may be configured in such a manner that a position away from the abutment joint 47 by 180 degrees in the circumferential direction of the inner peripheral wall 35 (position opposite to the abutment joint 47 in the circumferential direction of the inner peripheral wall 35) is defined as a starting point, and no locking window portion 36 may be formed within a range of 120 degrees extending clockwise and counterclockwise with the starting point being a center. However, as a matter of course, there may also be adopted such a configuration that the locking window portion 36 is formed within the range of 120 degrees extending clockwise and counterclockwise with the starting point being the center.

Further, an outer peripheral-side recessed portion 37 is formed in the outer peripheral wall 34 of the ring body portion 31. The outer peripheral-side recessed portion 37 has a shape of denting the outer peripheral wall 34 toward the radially outer side. The outer peripheral-side recessed portion 37 is formed so that the portion of the outer peripheral wall 34 having the outer peripheral-side recessed portion 37 is thinned. Owing to the presence of the outer peripheral - side recessed portion 37, the cover portion 50 to be described later can be further reliably prevented from rotating along the circumferential direction of the base ring 30. As a result, adhesion of the cover portion 50 on the outer peripheral wall 34 side with respect to the base ring 30 can be enhanced. Note that, in the configuration illustrated in FIG. 2, only one outer peripheral-side recessed portion 37 is formed. However, any number of the outer peripheral-side recessed portions 37 may be formed. Further, formation of the outer peripheral-side recessed portion 37 in the outer peripheral wall 34 may be omitted.

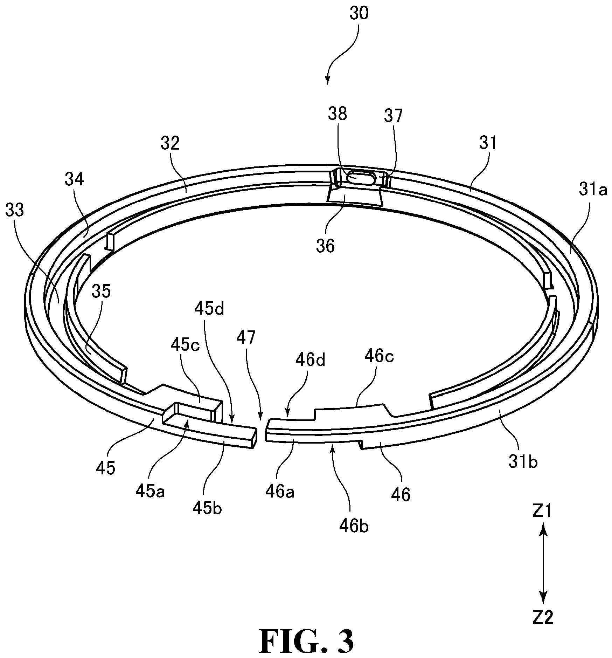

Note that, the dropout preventing portion such as the locking window portions 36 may be formed not only in the inner peripheral wall 35 but also in the bottom wall 33 or the outer peripheral wall 34. However, a back surface (surface on the Z2 side) of the bottom wall 33 and a surface of the outer peripheral wall 34 on the radially outer side are each a portion (functioning surface) configured to be brought into abutment against and slide on another member (for example, as an inner wall of a flow passage, an inner wall of a mounting groove of a butterfly valve, or a housing of an automatic transmission) . Accordingly, it is preferred that the dropout preventing portion be formed in a region other than the bottom wall 33 and the outer peripheral wall 34. Further, the dropout preventing portion configured to prevent detachment of the cover portion 50 may also be formed in the outer peripheral-side recessed portion 37 in the same manner as in the locking window portion 36. Other examples of the dropout preventing portion are illustrated in FIG. 3 to FIG. 7. When the dropout preventing portion is formed in the outer peripheral wall 34, the outer peripheral wall 34 corresponds to the peripheral wall.

FIG. 3 is a perspective view for illustrating a second configuration example of the base ring 30. In the configuration illustrated in FIG. 3, a protrusion 38 corresponding to part of the dropout preventing portion is formed on the outer peripheral -side recessed portion 37 so as to bulge toward the radially inner side. Therefore, at the time of forming of the cover portion 50, the liquid resin conforms to the shape of the protrusion 38 and wraps around the protrusion 38 and cures. As a result, the protrusion 38 functions as the dropout preventing portion configured to prevent detachment of the cover portion 50.

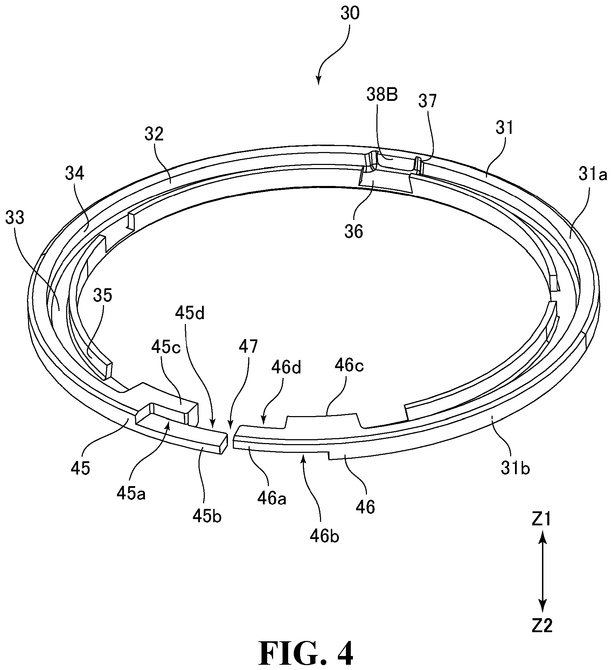

In FIG. 3, the protrusion 38 is formed so as to allow the liquid resin to wrap around an entire periphery of the protrusion 38. Therefore, the upper side (Z1 side) of the protrusion 38 is located on the lower side (Z2 side) with respect to the upper end surface 31a. However, the shape of the protrusion 38 is not limited to the shape illustrated in FIG. 3. For example, there may be adopted a protrusion (referred to as "protrusion 38B") as illustrated in FIG. 4. The protrusion 38B illustrated in FIG. 4 is formed so that an upper end side (Z1 side) thereof is flush with the upper end surface 31a. However, a gap is defined between the protrusion 38B and the bottom wall 33, and hence the liquid resin flows into the gap, and is cured. As a result, the protrusion 38B functions as the dropout preventing portion configured to prevent detachment of the cover portion 50.

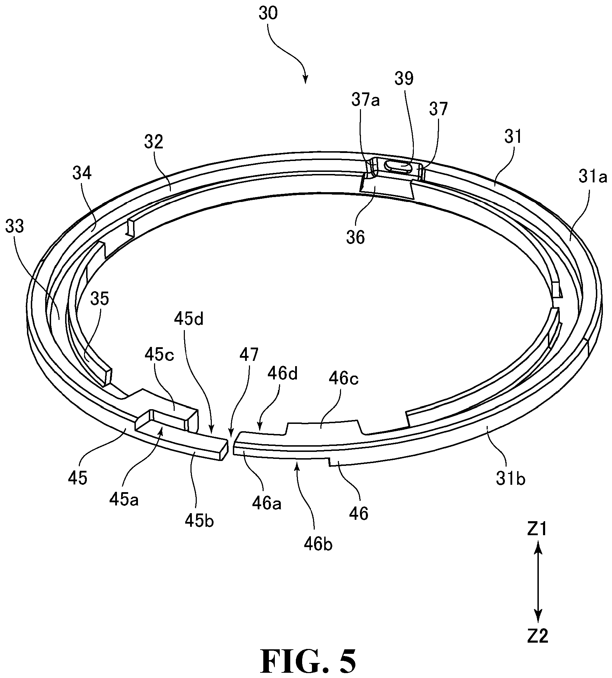

Further, FIG. 5 is a perspective view for illustrating a third configuration example of the base ring 30. In the configuration illustrated in FIG. 5, a recessed portion 39 corresponding to part of the dropout preventing portion is formed in the outer peripheral-side recessed portion 37 so as to bulge toward the radially outer side. The recessed portion 39 has a shape of denting an inner wall surface 37a of the outer peripheral-side recessed portion 37 on the outer peripheral side toward the radially outer side, and a periphery of the recessed portion 39 is surrounded with the inner wall surface 37a. However, the recessed portion 39 does not pass through the outer peripheral wall 34. Also in the recessed portion 39, at the time of forming of the cover portion 50, the liquid resin flows into the recessed portion 39, and then is cured in conformity with the recessed portion 39. As a result, the recessed portion 39 functions as the dropout preventing portion configured to prevent detachment of the cover portion 50.

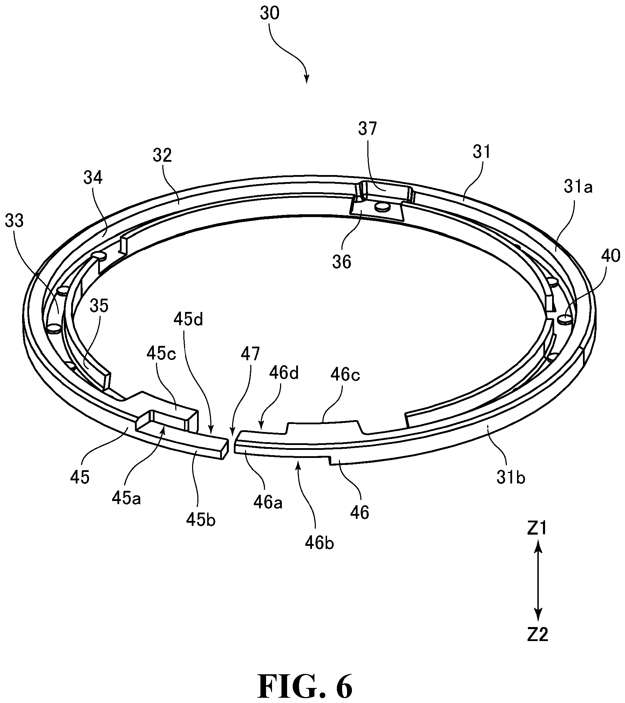

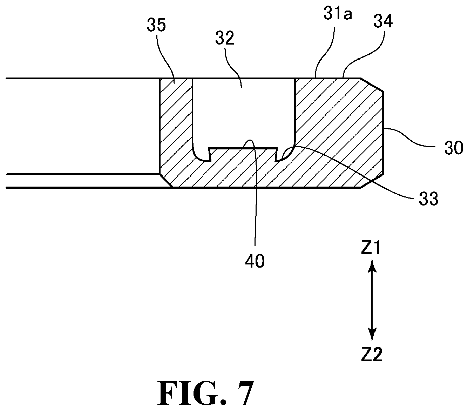

Further, FIG. 6 is a perspective view for illustrating a fourth configuration example of the base ring 30. In the configuration illustrated in FIG. 6, a plurality of (seventeen in total in the configuration illustrated in FIG. 6) bottom wall boss portions 40 corresponding to part of the dropout preventing portion are formed on the bottom wall 33 so as to protrude upward, but any number of the bottom wall boss portions 40 may be formed. FIG. 7 is a sectional view for illustrating a configuration of a vicinity of the bottom wall boss portion 40. As illustrated in FIG. 7, the bottom wall boss portion 40 is formed into such a shape that a width of the cross section is smallest at a root on the bottom wall 33 side and gradually increases as distancing away from the bottom wall 33. With this configuration, at the time of forming of the cover portion 50, the liquid resin surrounds around the bottom wall boss portion 40 and is cured in conformity with the shape of the bottom wall boss portion 40. As a result, the bottom wall boss portion 40 functions as the dropout preventing portion configured to prevent detachment of the cover portion 50.

The shape of the bottom wall boss portion 40 is not limited to the shape illustrated in FIG. 6 and FIG. 7. That is, the bottom wall boss portion 40 may have any shape as long as at least one portion on the bottom wall 33 side has a width smaller than the largest width in the cross section of the bottom wall boss portion 40.

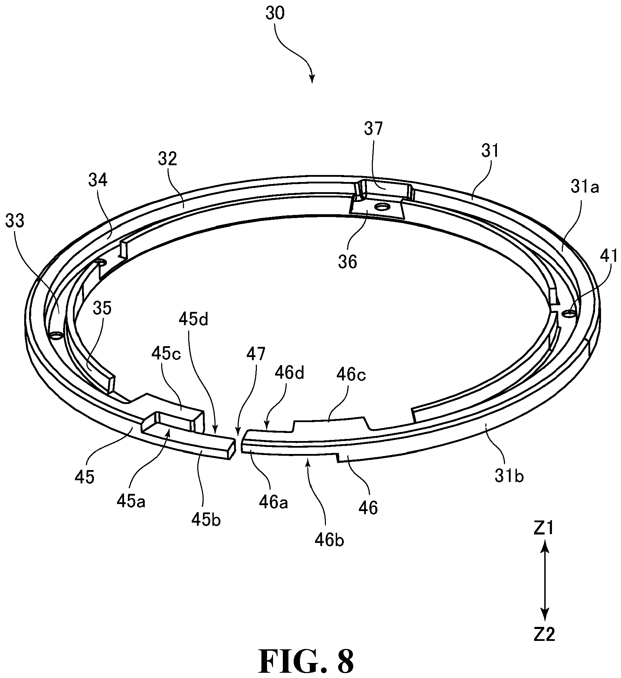

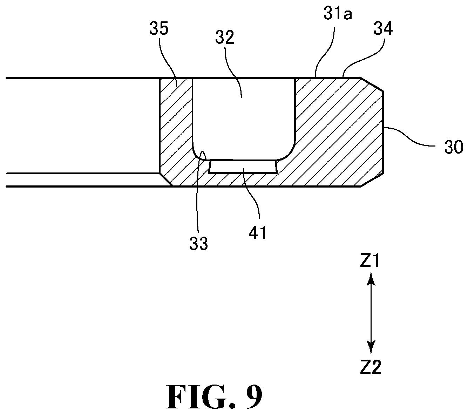

Further, FIG. 8 is a perspective view for illustrating a fifth configuration example of the base ring 30. In the configuration illustrated in FIG. 8, a plurality of (nine in total in the configuration illustrated in FIG. 8) hole portions 41 corresponding to part of the dropout preventing portion are formed on the bottom wall 33 so as to bulge out downward, but any number of the bottomwall boss portions 40 may be formed. FIG. 9 is a sectional view for illustrating a configuration of a vicinity of the hole portion 41. As illustrated in FIG. 9, the hole portion 41 is formed into such a shape that a width of the cross section is smallest at a root on the bottom wall 33 side and gradually increases as distancing away from the bottom wall 33. With this configuration, at the time of forming of the cover portion 50, the liquid resin flows into the hole portion 41, and then is cured in conformity with the shape of the hole portion 41. As a result, the hole portion 41 functions as the dropout preventing portion configured to prevent detachment of the cover portion 50. The hole portion 41 does not penetrate the bottom wall 33, but may be configured to penetrate the bottom wall 33.

Note that, the shape of the hole portion 41 is not limited to the shape illustrated in FIG. 8 and FIG. 9. That is, the hole portion 41 may have any shape as long as at least one portion on a front surface side of the bottom wall 33 has a width smaller than the largest width in the cross section of the hole portion 41.

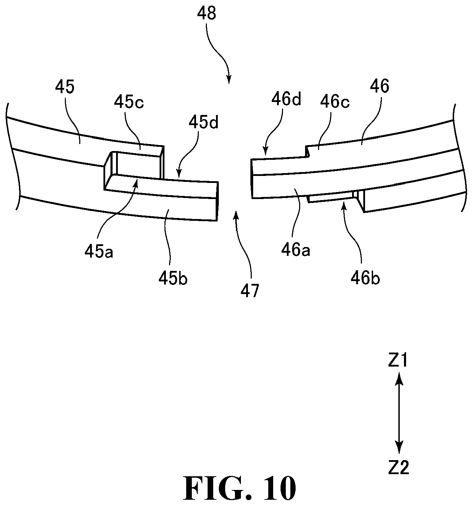

Further, the one end-side engagement portion 45 and the another end-side engagement portion 46 are formed in the base ring 30 so as to be continuous with the ring body portion 31. The abutment joint 47 being a gap is formed between the one end-side engagement portion 45 and the another end-side engagement portion 46. FIG. 10 is an enlarged partial perspective view for illustrating the configuration of the vicinity of the abutment joint 47 (first configuration example of the vicinity of the abutment joint 47). As illustrated in FIG. 3 to FIG. 10, the one end-side engagement portion 45 is a portion continuous with one end side of the ring body portion 31 in the circumferential direction thereof. Further, the another end-side engagement portion 46 is a portion continuous with another end side of the ring body portion 31 in the circumferential direction thereof. The recessed fitting groove 32 is not formed in the one end-side engagement portion 45 and the another end-side engagement portion 46.

The abutment joint 47 in this embodiment is an abutment joint of a gas-tight type. That is, the one end-side engagement portion 45 and the another end-side engagement portion 46 each have an uneven stepped shape, and the one end-side engagement portion 45 and the another end-side engagement portion 46 are brought into tight contact with each other through application of an elastic force from the tension ring 60. With this configuration, when the one end-side engagement portion 45 and the another end-side engagement portion 46 are held in tight contact with each other, leakage of a fluid such as gas or liquid from the abutment joint 47 is significantly reduced. However, under a state in which the tension ring 60 is not mounted to the base ring 30, the one end-side engagement portion 45 and the another end-side engagement portion 46 are separated from each other to define the abutment joint 47 with the gap.

The one end-side engagement portion 45 is specifically described. In the configuration illustrated in, for example, FIG. 3, an outer peripheral recessed portion 45a is formed on the radially outer side of the one end-side engagement portion 45 so as to be recessed to the lower side (Z2 side) with respect to the upper end surface 31a. The outer peripheral recessed portion 45a is recessed by substantially a half of a length of the ring body portion 31 in its thickness direction (Z direction). A portion on the lower side (Z2 side) of the outer peripheral recessed portion 45a, which has a thickness about half the thickness of the ring body portion 31 and extends to a distal end portion of the base ring 30 in the circumferential direction with respect to the ring body portion 31, is referred to as an outer peripheral thin projecting portion 45b.

Further, on the radially inner side of the one end-side engagement portion 45 with respect to the outer peripheral recessed portion 45a, an inner peripheral projecting portion 45c and an inner peripheral recessed portion 45d are formed. The inner peripheral projecting portion 45c is flush with the upper end surface 31a, and has a width about half the width of the ring body portion 31. Further, a circumferential length of the inner peripheral projecting portion 45c is about half a circumferential length of the outer peripheral recessed portion 45a. Therefore, on a side of the outer peripheral recessed portion 45a, which is closer to the distal end in the circumferential direction than the inner peripheral projecting portion 45c, the inner peripheral recessed portion 45d is formed adj acently to the outer peripheral thin projecting portion 45b on the radially inner side. Note that, at least one of the outer peripheral recessed portion 45a or the inner peripheral recessed portion 45d corresponds to one end-side recessed portion, and at least one of the outer peripheral thin projecting portion 45b or the inner peripheral projecting portion 45c corresponds to one end-side projecting portion.

Further, the another end-side engagement portion 46 can be held in abutment against the outer peripheral recessed portion 45a, the outer peripheral thin projecting portion 45b, the inner peripheral projecting portion 45c, and the inner peripheral recessed portion 45d in an tight contact state. Specifically, an outer peripheral thin projecting portion 46a, an outer peripheral recessed portion 46b, an inner peripheral projecting portion 46c, and an inner peripheral recessed portion 46d are formed in the another end-side engagement portion 46.

The outer peripheral thin projecting portion 46a is a portion to be fitted into the outer peripheral recessed portion 45a, and the outer peripheral recessed portion 46b is a portion into which the outer peripheral thin projecting portion 45b is fitted. Moreover, the inner peripheral recessed portion 46d is a portion into which the inner peripheral projecting portion 45c is fitted, and the inner peripheral projecting portion 46c is a portion to be fitted into the inner peripheral recessed portion 45d. When those portions are fitted to each other, facing surfaces of those portions are held in intimate contact with each other, or are opposed to each other with an extremely small gap. Further, through fitting of those portions, an abutment joint engagement portion 48 (see FIG. 10), which is formed of the one end-side engagement portion 45 and the another end-side engagement portion 46, is provided so as to be flush with the upper end surface 31a and a lower end surface 31b of the ring body portion 31. Note, that, at least one of the outer peripheral thin projecting portion 46a or the inner peripheral projecting portion 46c corresponds to another end-side projecting portion, and at least one of the outer peripheral recessed portion 46b or the inner peripheral recessed portion 46d corresponds to another end-side recessed portion.

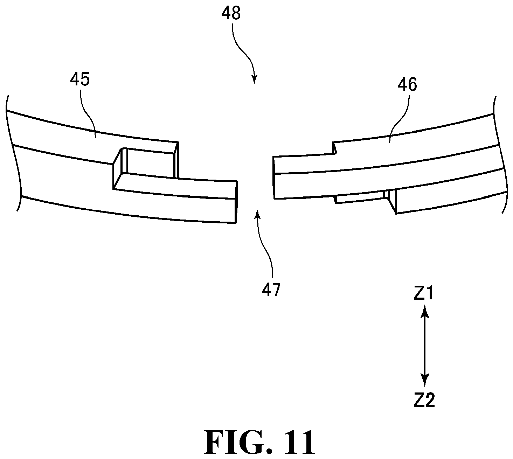

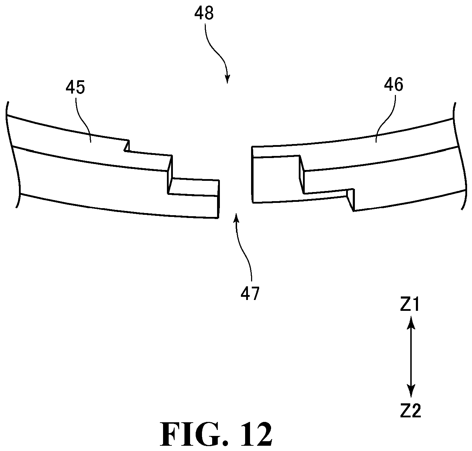

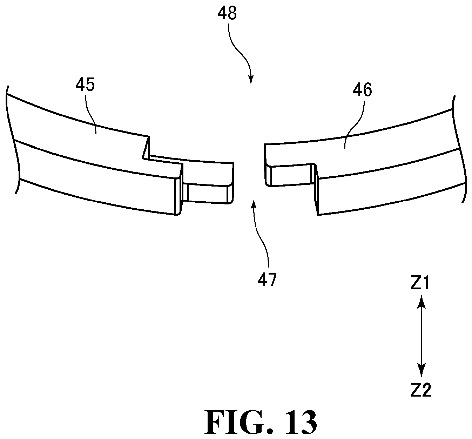

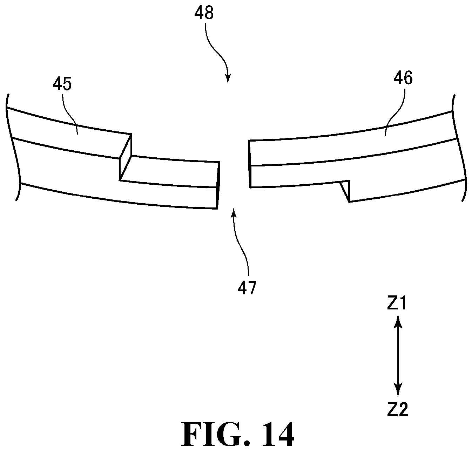

The configuration of the abutment joint engagement portion 48 formed of the one end-side engagement portion 45 and the another end-side engagement portion 46 is not limited to that illustrated in FIG. 10. The other configurations of the abutment joint engagement portion 48 are illustrated in FIG. 11 to FIG. 14. FIG. 11 is a partial perspective view for illustrating a second configuration example of the abutment joint engagement portion 48. In each of the abutment joint engagement portions 48 illustrated in FIG. 11 to FIG. 14, a projecting portion (corresponding to the one end-side projecting portion) is formed on the one end-side engagement portion 45 side, and the another end-side engagement portion 46 includes a recessed portion (corresponding to the another end-side recessed portion) into which the projecting portion is fitted. Further, a recessed portion (corresponding to the one end-side recessed portion) is formed on the one end-side engagement portion 45 side, and the another end-side engagement portion 46 includes a projecting portion (corresponding to the another end-side projecting portion) to be fitted into the recessed portion.

### (2) Arrangement of Base Ring 30 in Cavity 101 of Die 100 (Cavity Arranging Step)

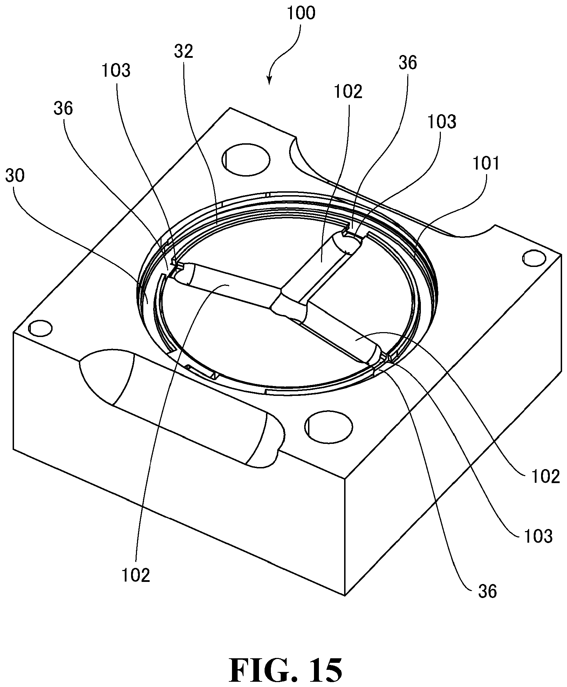

After the above-mentioned base ring 30 is formed, the base ring 30 is arranged in the cavity 101 of a die 100. At this time, the base ring 30 is arranged inside the cavity 101 under a state in which the one end-side engagement portion 45 and the another end-side engagement portion 46 are held in intimate contact with each other. However, the base ring 30 may be arranged inside the cavity 101 under a state in which the one end-side engagement portion 45 and the another end-side engagement portion 46 are not held in intimate contact with each other. FIG. 15 is a view for illustrating a configuration of the die 100 and a state in which the base ring 30 is inserted into the cavity 101 of the die 100. Note that, the die 100 illustrated in FIG. 15 is a portion corresponding to a lower mold, and a portion corresponding to an upper mold is not shown.

The die 100 includes a sprue (not shown) through which the liquid resin is injected from a nozzle of an injection molding machine (not shown) . Another end portion of the sprue is connected to one end portion of each of runners 102 that are branching passages through which the liquid resin is poured into the cavity 101. Further, the another end portion of each of the runners 102 is connected to each of gates 103. The gates 103 serve as inlets from which the liquid resin is poured into the cavity 101.

Here, when the base ring 30 is set in the cavity 101, the setting is performed so that the locking window portions 36 are positioned at the gates 103, respectively. In this manner, the cover portion 50 as described later is easily formed. However, the base ring 30 may be set in the cavity 101 under a state in which the locking window portions 36 are not positioned at the gates 103, respectively.

### (3) Arrangement of Tension Ring 60 in Recessed Fitting Groove 32 (Tension Ring Setting Step)

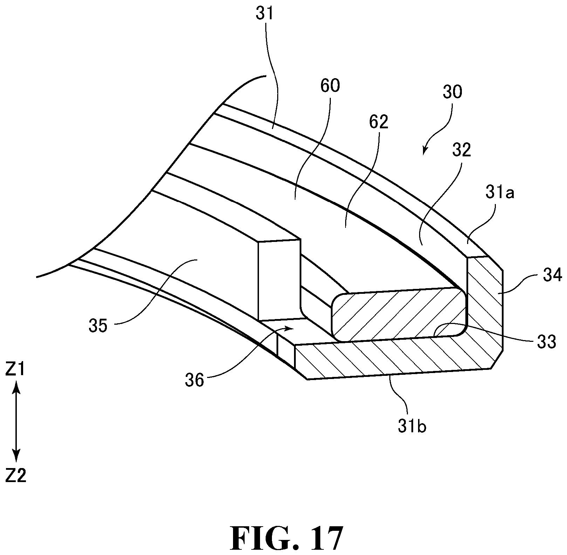

After the base ring 30 is set in the cavity 101, the tension ring 60 is fitted into the recessed fitting groove 32 of the base ring 30. A state in which the tension ring 60 is fitted into the recessed fitting groove 32 in this manner is illustrated in FIG. 15 and FIG. 16. FIG. 16 is a perspective view for illustrating the state in which the tension ring 60 is fitted into the recessed fitting groove 32. In FIG. 16, an illustration of the die 100 is omitted. FIG. 17 is an enlarged partial view for illustrating a vicinity of the locking window portion 36 in a state in which the tension ring 60 is fitted into the recessed fitting groove 32 illustrated in FIG. 16.

As illustrated in FIG. 16 and FIG. 17, the tension ring 60 has a width dimension corresponding to the recessed fitting groove 32, and has a circumferential length corresponding to the recessed fitting groove 32. The tension ring 60 is made of metal such as stainless steel. The tension ring 60 has a split ring shape having an abutment joint 61 (corresponding to a gap portion) formed at one portion in the circumferential direction. A gap of the abutment joint 61 is set so that, as illustrated in FIG. 16, the tension ring 60 applies an elastic force of bringing the one end-side engagement portion 45 and the another end-side engagement portion 46 into tight contact with each other. Therefore, the gap of the abutment joint 61 before fitting of the tension ring 60 into the recessed fitting groove 32 is set smaller than the gap of the abutment joint 61 in a state in which the one end-side engagement portion 45 and the another end-side engagement portion 46 are held in tight contact with each other as illustrated in FIG. 16.

Further, when the tension ring 60 is fitted into the recessed fitting groove 32, an upper surface 62 (surface on the Z1 side) of the tension ring 60 is arranged lower than the upper end surface 31a (corresponding to one end surface) of the base ring 30. Thus, the cover portion 50 can be formed by pouring the liquid resin to the upper side (Z1 side) of the tension ring 60.

### (4) Forming of Cover Portion 50 (Sealing Step)

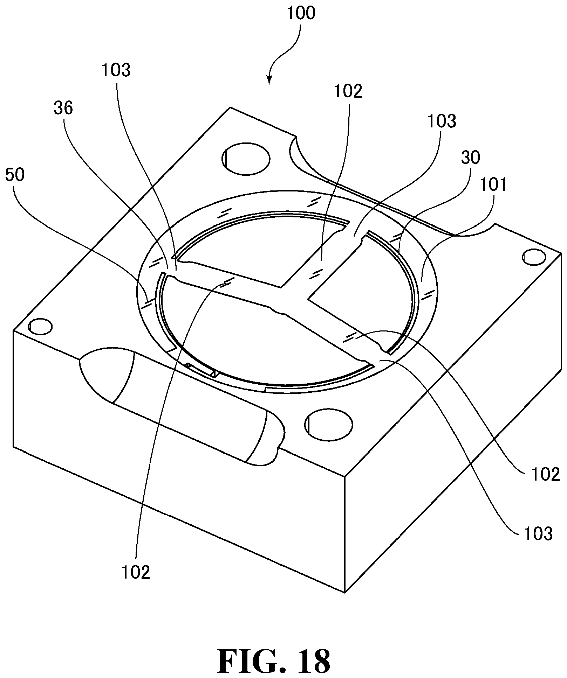

Further, after the base ring 30 is set in the cavity 101 and then the tension ring 60 is fitted into the recessed fitting groove 32, the cover portion 50 is formed. FIG. 18 is a perspective view for illustrating a state in which the cover portion 50 is formed in the die 100 illustrated in FIG. 15. When the cover portion 50 is formed, the liquid resin injected from the nozzle of the injection molding machine (not shown) flows into the cavity 101 through the sprue (not shown), the runners 102, and the gates 103 at a predetermined pressure. At this time, inside the cavity 101, the liquid resin flows into the gap between the base ring 30 and the tension ring 60.

As a material of the resin to be flowed into cavity 101, cured, and then forming the lid portion 50, there may be used, for example, polyamide (PA), a fluorine resin (e.g., polytetrafluoroethylene (tetrafluoride) (PTFE), a tetrafluoroethylene-perfluoroalkyl vinyl ether copolymer (PFA), or a tetrafluoroethylene-ethylene copolymer (ETFE)), and an alloy material thereof, or a superengineering plastic typified by a liquid crystal polymer (LCP), polyimide (PI), polyether ketone (PEK), polyaryl ether ketone (PAEK), polyether ketone ether ketone ketone (PEKEKK), polyether ether ketone (PEEK), or polyphenylene sulfide (PPS) may be used, and polybenzimidazole (PBI) having high heat resistance may preferably be used. Here, the resin for forming the cover portion 50 may be the same materials as those of the resin for forming the base ring 30 or may use different materials.

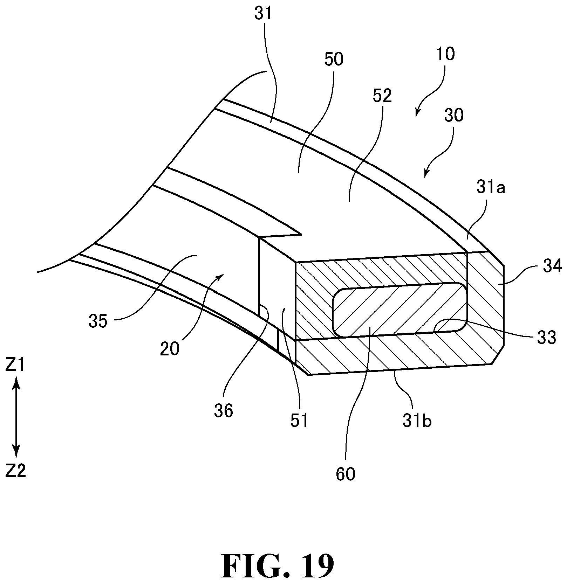

FIG. 19 is an enlarged partial view for illustrating the vicinity of the locking window portion 36 in a state in which the cover portion 50 is formed as illustrated in FIG. 18. As illustrated in FIG. 19, the cover portion 50 is formed under a state in which the liquid resin is flown into the recessed fitting groove 32. On this occasion, the tension ring 60 is covered by the cover portion 50 so as to not be exposed to the outside. That is, the base ring 30 and the cover portion 50 form the resin ring body 20 including the tension ring 60 therein.

Further, at the time of forming of the cover portion 50, the locking projections 51 to be inserted into the locking window portions 36 are also formed. Further, through curing of the liquid resin, the cover portion 50 is formed, and hence boundary surfaces of the cover portion 50, including the locking projections 51, are held in tight contact with inner wall surfaces of the recessed fitting groove 32 and inner wall surfaces of the locking window portions 36. Note that, the inner wall surfaces of the recessed fitting groove 32 correspond to wall surfaces of the recessed fitting groove 32 with which the cover portion 50 is held in tight contact. This wall surfaces include a surface of the bottom wall 33 on the upper side (Z1 side), an inner wall surface of the outer peripheral wall 34 on the recessed fitting groove 32 side, and an inner wall surface of the inner peripheral wall 35 on the recessed fitting groove 32 side. Further, the inner wall surface of the locking window portion 36 includes a wall surface of the locking window portion 36 with which the locking projection 51 is held tight contact in FIG. 19. This wall surfaces include the surface of the bottom wall 33 on the upper side (Z1 side), and a surface having a shape of cutting the inner peripheral wall 35 along a radial direction of the base ring 30. The locking projection 51 is formed into a shape conforming to the locking window portion 36. Specifically, the locking projection 51 is formed to have a circumferential length being longer as it goes to the lower side (Z2 side) . Thus, the locking projection 51 functions as the dropout preventing portion configured to prevent detachment of the cover portion 50.

Further, an upper surface 52 of the cover portion 50 is formed so as to be flush with the upper end surface 31a. However, the cover portion 50 may be formed so as to cover the upper end surface 31a. In this case, the upper end surface 31a is not exposed.

After the cover portion 50 is formed, the seal ring 10 is taken out of the cavity 101, and unnecessary portions such as burrs are removed.

The above-mentioned steps described in the items (1) to (4) are carried out, and another step is further carried out, as appropriately needed, to thereby form the seal ring 10 as illustrated in FIG. 1.

### [3. Regarding Effects]

Provided is a manufacturing method for the above-mentioned seal ring 10 including the tension ring 60 made of metal, and the resin ring body 20 that is made of a resin and includes the tension ring 60 therein. The manufacturing method includes: a base ring forming step of forming the base ring 30, which is made of a resin and includes the abutment joint 47 (abutment joint 47 of a gas-tight type) with the overlapped portion at least in the axial direction (Z direction) of the base ring 30 between the one end-side engagement portion 45 on one end side of the circumferential direction and the another end-side engagement portion 46 on another end side of the circumferential direction; a cavity arranging step of arranging the base ring 30 in the cavity 101 of the die 100; a tension ring setting step of setting the metallic tension ring 60 in the recessed fitting groove 32 (ring arrangement portion) of the base ring 30, the tension ring 60 having the abutment joint 61 (gap portion) in a portion corresponding to the one end-side engagement portion 45 and the another end-side engagement portion 46; and a sealing step of forming the cover portion 50, which forms the resin ring body 20 made of the resin together with the base ring 30, and forms the locking window portions 36 and the locking projections 51 (dropout preventing portion) between the base ring 30 and the cover portion 50, the locking window portions 36 and the locking projections 51 being configured to prevent the base ring 30 and the cover portion 50 from being peeling off each other, through pouring of the liquid resin into the cavity 101.

Accordingly, the seal ring 10 having the abutment joint 47 of a gas-tight type being a special abutment joint can be manufactured under a state in which the tension ring 60 made of metal is included in the resin ring body 20. That is, the metallic tension ring 60 is not exposed to the outside, but is covered with the resin ring body 20. Therefore, the metallic tension ring 60 can be prevented from being corroded by an outside atmosphere. Further, the seal ring 10 includes the metallic tension ring 60 in the resin ring body 20. Thus, for example, even when the seal ring 10 is mounted to the mounting groove on the outer peripheral side of the butterfly valve of the internal combustion engine, the seal ring 10 can be prevented from falling out of the butterfly valve at the time of opening the butterfly valve.

Further, in this embodiment, the recessed fitting groove 32 corresponding to the ring arrangement portion is recessed from the upper end surface 31a (one end surface) of the base ring 30. In the tension ring setting step, the tension ring 60 is set in the recessed fitting groove 32 so that a height of the tension ring 60 is lower than the upper end surface 31a (one end surface) . Thus, in the sealing step, the liquid resin can be filled into the recessed fitting groove 32 so as to cover the upper side (Z1 side) of the tension ring 60, and the tension ring 60 can be hermetically sealed by the cover portion 50 formed in sealing step and the base ring 30.

Further, in this embodiment, the locking window portions 36 and the locking projections 51 (dropout preventing portion) are provided. Each of the locking window portions 36 is formed in the base ring 30, and has a circumferential length being present between the bottom wall 33 and the upper end surface 31a (one end surface) and adjacent to the recessed fitting groove 32, and being a cutout portion cutting out a peripheral wall adj acent to the recessed fitting groove, the circumferential length increasing as going from the one end surface of the base ring toward the bottom wall of the recessed fitting groove. The locking projections 51 are formed on the cover portion 50, and are fitted into the locking window portions 36. Further, in the sealing step, the locking projections 51 fitted into the locking window portions 36 are formed.

Therefore, when the cover portion 50 is formed in the sealing step, through fitting between the locking window portions 36 and the locking projections 51, detachment of the cover portion 50 can be reliably prevented.

Further, in this embodiment, the abutment joint engagement portion 48 formed of the one end-side engagement portion 45 and the another end-side engagement portion 46 is provided so as to be continuous with both end sides of the ring body portion 31 of the base ring 30 in which the recessed fitting groove 32 is formed. The abutment joint 47 is defined between the one end-side engagement portion 45 and the another end-side engagement portion 46. Further, in the cavity arranging step, the one end-side projecting portion formed on the one end-side engagement portion 45 is fitted into the another end-side recessed portion formed in the another end-side engagement portion 46, and the another end-side projecting portion formed on the another end-side engagement portion 46 is fitted into the one end-side recessed portion formed in the one end-side engagement portion 45.

Therefore, when the seal ring 10 is formed, the one end-side engagement portion 45 and the another end-side engagement portion 46 are brought into tight contact with each other through application of the elastic force from the tension ring 60. With this configuration, during the tight contact, leakage of a fluid such as gas or liquid from the abutment joint 47 can be significantly reduced. Further, through expansion of the gap of the abutment joint 47, the seal ring 10 can easily be mounted to a mounting portion, for example, the mounting groove of the butterfly valve.

Further, the seal ring 10 according to this embodiment having the resin ring body 20 with the metal tension ring 60 being enclosed the resin ring body 20 includes: the base ring 30 which is made of resin, forms the resin ring body 20, and includes the abutment joint 47 of a gas-tight type, the abutment joint 47 being located between the one end-side engagement portion 45 of one-end side in circumferential direction and the another end-side engagement portion 46 of another end side in circumferential direction; the abutment joint 61 (gap portion) being disposed in a portion corresponding to the one end-side engagement portion 45 and the another end-side engagement portion 46; the metallic tension ring 60 being disposed in the recessed fitting groove 32 (ring arrangement portion) of the base ring 30; and the cover portion 50 which forms the resin ring body 20 together with the base ring 30 and includes the locking window portions 36 and the locking projections 51 (dropout preventing portion) between the base ring 30 and the cover portion 50 so as to prevent from being detached from the base ring 30.

Therefore, in the seal ring 10 having the abutment joint 47 of a gas-tight type being a special abutment joint, the metallic tension ring 60 is not exposed to the outside, but is covered with the resin ring body 20. Therefore, the metallic tension ring 60 can be prevented from being corroded by an outside atmosphere. Further, the seal ring 10 includes the metallic tension ring 60 in the resin ring body 20. Thus, for example, even when the seal ring 10 is mounted to the mounting groove on the outer peripheral side of the butterfly valve of the internal combustion engine, the seal ring 10 can be prevented from falling out of the butterfly valve at the time of opening the butterfly valve.

Further, in this embodiment, the recessed fitting groove 32 corresponding to the ring arrangement portion is recessed from the upper end surface 31a (one end surface) of the base ring 30, and the tension ring 60 is set so that the height of the tension ring 60 is lower than the upper end surface 31a (one end surface) . Therefore, when the cover portion 50 enters the recessed fitting groove 32, the tension ring 60 can be hermetically sealed by the cover portion 50 and the base ring 30.

Further, this embodiment is provided with the locking window portions 36 which is formed in the base ring 30 and has a circumferential length being located between the bottom wall 33 and the upper end surface 31a (one end surface) and being a cutout portion cutting out the inner peripheral wall 35 (peripheral wall) adjacent to the recessed fitting groove 32, the circumferential length of the cutout portion being increasing as going from the upper end surface 31a (one end surface) toward the bottom wall 33 of the recessed fitting groove 32, and the locking projections 51 (dropout preventing portion) formed on the cover portion 50 and fitted into the locking window portions 36.

Therefore, through fitting between the locking window portions 36 and the locking projections 51, detachment of the cover portion 50 can be reliably prevented.

Further, in this embodiment, the abutment joint engagement portion 48 formed of the one end-side engagement portion 45 and the another end-side engagement portion 46 is provided so as to be continuous with both end sides of the ring body portion 31 of the base ring 30 in which the recessed fitting groove 32 is formed. The abutment joint 47 is defined between the one end-side engagement portion 45 and the another end-side engagement portion 46. Further, the one end-side projectingportion and the one end-side recessed portion are formed in the one end-side engagement portion 45, and the another end-side projecting portion and the another end-side recessed portion are formed in the another end-side engagement portion 46. The one end-side projecting portion formed on the one end-side engagement portion 45 is fitted into the another end-side recessed portion formed in the another end-side engagement portion 46, and the another end-side projecting portion formed on the another end-side engagement portion 46 is fitted into the one end-side recessed portion formed in the one end-side engagement portion 45.

Therefore, in the seal ring 10, the one end-side engagement portion 45 and the another end-side engagement portion 46 are brought into tight contact with each other through application of the elastic force from the tension ring 60. With this configuration, during the tight contact, leakage of a fluid such as gas or liquid from the abutment joint 47 can be significantly reduced. Further, through expansion of the gap of the abutment joint 47, the seal ring 10 can be easily mounted to a mounting portion, for example, the mounting groove of the butterfly valve.

### [4. Modification Example]

In the above, description is made of the embodiments of the present invention. However, the present invention can be variously modified to modes other than those described above. Now, description is made of the modification.

In the above-mentioned embodiment, the recessed fitting groove 32 is described as the ring arrangement portion in which the tension ring 60 is arranged. However, the ring arrangement portion is not limited to the recessed fitting groove 32. For example, instead of the recessed fitting groove 32 having a recessed shape, a region that includes the bottom wall 33 and any one of the outer peripheral wall 34 and the inner peripheral wall 35, and has a substantially L-shaped cross section may be used as the ring arrangement portion. Further, instead of the recessed fitting groove 32 having a recessed shape, a region including only the bottom wall 33 without the outer peripheral wall 34 and the inner peripheral wall 35 may be used as the ring arrangement portion.

Further, in the above-mentioned embodiment, (1) base ring forming step, (2) cavity arranging step, (3) tension ring setting step, and (4) sealing step are performed in the stated order to form the seal ring 10. However, instead of this order of the steps, the above-mentioned steps may be performed in a different order to form the seal ring 10. For example, it is not always required that the tension ring setting step be performed after the base ring 30 is arranged in the cavity 101. That is, before performing the cavity arranging step of arranging the base ring 30 in the cavity 101, the tension ring setting step of fitting the tension ring 60 into the recessed fitting groove 32 may be performed.

Further, in the above-mentioned embodiment, the seal ring 10 is formed to have a substantially rectangular cross section. However, a sectional shape of the seal ring 10 is not limited to the substantially rectangular shape. For example, the seal ring 10 may have a keystone shape that has a cross section gradually decreasing in thickness toward the radially inner side. Alternatively, the seal ring 10 may have a substantially T-shape that has a cross section having a smaller thickness on the radially inner side than that on the radially outer side, or may have a barrel shape having a curved outer peripheral surface. Further, the inner peripheral wall 35 of the seal ring 10 may include a plurality of protruding portions further protruding from the inner peripheral wall 35 toward the radially inner side, or the upper end surface 31a or the lower end surface 31b of the seal ring 10 may have an oil groove configured to guide lubricating oil.

Note that, the abutment joint of a gas-tight type is not limited to the configurations of the abutment joint 47 illustrated in, for example, FIG. 10 to FIG. 14. That is, as long as the abutment joint has overlapping portions at least in the axial direction (Z direction), the present invention is also applicable to abutment joints of various types other than the type in the above-mentioned embodiment.

### Reference Sign List

10 ... seal ring, 20 ... resin ring body, 30 ... base ring, 31 ... ring body portion, 31a ... upper end surface (corresponding to one end surface), 31b ... lower end surface, 32 ... recessed fitting groove, 33 ... bottom wall, 34 ... outer peripheral wall (corresponding to peripheral wall), 35 ... inner peripheral wall (corresponding to peripheral wall), 36 ... locking window portion (corresponding to part of dropout preventing portion), 37 ... outer peripheral -side recessed portion, 38, 38B ... protrusion (corresponding to part of dropout preventing portion), 39 ... recessed portion (corresponding to part of dropout preventing portion), 40 ... bottom wall boss portion (corresponding to part of dropout preventing portion), 41 ... hole portion (corresponding to part of dropout preventing portion), 45 ··· one end-side engagement portion, 45a ... outer peripheral recessed portion (corresponding to one end-side recessed portion), 45b ... outer peripheral thin projecting portion (corresponding to one end-side projecting portion),45c ... inner peripheralprojecting portion (corresponding to one end-side projecting portion), 45d ... inner peripheral recessed portion (corresponding to one end-side recessed portion), 46a ... outer peripheral thin projecting portion (corresponding to another end-side projecting portion), 46b ... outer peripheral recessed portion 46b (corresponding to another end-side recessed portion),46c ... inner peripheralprojecting portion (corresponding to another end-side projecting portion), 46d ... inner peripheral recessed portion (corresponding to another end-side recessed portion), 47 ... abutment joint, 48 ... abutment joint engagement portion, 50 ... cover portion, 51 ... locking projection (corresponding to part of dropout preventing portion), 52 ··· upper surface, 60 ... tension ring, 61 ... abutment joint (corresponding to gap portion), 62 ··· upper surface, 100 ... die, 101 ... cavity, 102 ... runner, 103 ... gate

## Claims

1. A manufacturing method for a seal ring (10) having a resin ring body (20) which is made of a resin and includes a tension ring (60) made of metal in the resin ring body, the manufacturing method comprising:
a base ring forming step of forming a base ring (30) which is made of a resin and includes an abutment joint (47) with an overlapped portion between one end-side engagement portion (45) on one end side of circumferential direction and another end-side engagement portion (46) on another end side of the circumferential direction, the overlapped portion being overlapping at least in an axial direction;
a cavity arranging step of arranging the base ring (30) in a cavity (101) of a die (100);
a tension ring setting step of setting the tension ring (60) made of metal in
a ring arrangement portion of the base ring, the tension ring (60) having a gap portion (61) in a portion corresponding to the one end-side engagement portion (45) and the another end-side engagement portion (46); and
a sealing step of forming a cover portion (50) which forms the resin ring body (20) together with the base ring (30) through pouring of a liquid resin into the cavity (101)
and a dropout preventing portion (51) which is configured to prevent the base ring (30) and the cover portion (50) from peeling off each other, the dropout preventing portion (51) being formed between the base ring (30) and the cover portion (50).

2. The manufacturing method for the seal ring according to claim 1,
wherein the ring arrangement portion includes a recessed fitting groove (32) recessed from one end surface of the base ring, and
wherein, in the tension ring setting step, the tension ring is set in the recessed fitting groove in a state in which a height of the tension ring is lower than the one end surface.

3. The manufacturing method for the seal ring according to claim 2,
wherein the dropout preventing portion comprises:
a locking window portion (36) which is formed in the base ring and has a circumferential length being present between a bottom wall of the recessed fitting groove and one end surface of the base ring and being a cutout portion cutting out a peripheral wall adj acent to the recessed fitting groove, the circumferential length increasing as going from the one end surface of the base ring toward the bottom wall of the recessed fitting groove; and
a locking projection (51) formed in the cover portion and fitted into the locking window portion,
wherein, in the sealing step, the locking projection to be fitted into the locking window portion is formed.

4. The manufacturing method for the seal ring according to claim 2 or 3,
wherein an abutment joint engagement portion formed of the one end-side engagement portion and the another end-side engagement portion is provided so as to be continuous with both end sides of a ring body portion of the base ring, the ring body portion being a portion of the base ring where the recessed fitting groove is formed,
wherein the abutment joint is defined between the one end-side engagement portion and the another end-side engagement portion, and
wherein, in the cavity arranging step, one end-side projecting portion formed on the one end-side engagement portion is fitted into another end-side recessed portion formed in the another end- side engagement portion, and another end-side projecting portion formed on the another end-side engagement portion is fitted into one end-side recessed portion formed in the one end-side engagement portion.

5. A seal ring (10) having a resin ring body (20) which is made of resin and includes a tension ring (60) made of metal in the resin ring body (20) , the seal ring (10) comprising:
a base ring (30) being made of a resin, forming the resin ring body (20) , and including an abutment joint (47) with an overlapped portion between one end-side engagement portion (45) on one end side of circumferential direction and another end-side engagement portion (46) on another end side of the circumferential direction, the overlapped portion being overlapping at least in an axial direction,
the tension ring (60) made of metal, the tension ring (60) having a gap portion (61) in a portion corresponding to the one end-side engagement portion (45) and the another end-side engagement portion (46), and being arranged in a ring arrangement portion of the base ring, **characterized in that** the seal ring comprises a cover portion (50) forming the resin ring body (20) together with the base ring, and being prevented from being peeling off from the base ring owing to presence of a dropout preventing portion (51) between the base ring (30) and the cover portion (50).

6. The seal ring according to claim 5, wherein the ring arrangement portion includes a recessed fitting groove (32) recessed from one end surface of the base ring, and wherein the tension ring is set in a state in which a height of the tension ring is lower than the one end surface.

7. The seal ring according to claim 6,
wherein the dropout preventing portion comprises:
a locking window portion (36) which is formed in the base ring and has a circumferential length being present between a bottom wall of the recessed fitting groove and one end surface of the base ring and being a cutout portion cutting out a peripheral wall adjacent to the recessed fitting groove, the circumferential length increasing as going from the one end surface of the base ring toward the bottom wall of the recessed fitting groove; and
a locking projection formed in the cover portion and fitted into the locking window portion.

8. The seal ring according to claim 6 or 7,
wherein an abutment joint engagement portion formed of the one end-side engagement portion and the another end-side engagement portion is provided so as to be continuous with both end sides of a ring body portion of the base ring, the ring body portion being formed with the recessed fitting groove,
wherein the abutment joint is defined between the one end-side engagement portion and the another end-side engagement portion,
wherein the one end-side engagement portion includes one end-side projecting portion and one end-side recessed portion,
wherein the another end-side engagement portion includes another end-side projecting portion and another end-side recessed portion, and
wherein the one end-side projecting portion is fitted into the another end-side recessed portion, and the another end-side projecting portion is fitted into the one end-side recessed portion.

## Patentansprüche

1. Ein Herstellungsverfahren für einen Dichtungsring (10), der einen Kunstharzringkörper (20) aufweist, der aus einem Kunstharz gefertigt wird und einen Spannring (60) einschließt, der aus Metall in dem Kunstharzringkörper gefertigt wird, wobei das Herstellungsverfahren Folgendes umfasst:
einen Basisringformschritt zum Formen eines Basisrings (30), der aus einem Kunstharz gefertigt wird und eine Stoßfuge (47) mit einem überlagerten Abschnitt zwischen einem Endseiten-Eingriffsabschnitt (45) auf einer Endseite in Umfangsrichtung und einem anderen Endseiten-Eingriffsabschnitt (46) auf einer anderen Endseite in der Umfangsrichtung einschließt, wobei der überlagernde Abschnitt mindestens in einer Axialrichtung überlagernd ist;
einen Hohlraumanordnungsschritt zum Anordnen des Basisrings (30) in einem Hohlraum (101) einer Matrize (100);
einen Spannringeinstellschritt zum Einstellen des aus Metall gefertigten Spannrings (60) in einem Ringanordnungsabschnitt des Basisrings, wobei der Spannring (60) einen Spaltabschnitt (61) in einem Abschnitt aufweist, der dem einen Endseiten-Eingriffsabschnitt (45) und dem anderen Endseiten-Eingriffsabschnitt (46) entspricht;
und
einen Dichtungsschritt zum Formen eines Abdeckungsabschnitts (50), der den Kunstharzringkörper (20) zusammen mit dem Basisring (30) durch Gießen eines flüssigen Kunstharzes in den Hohlraum (101) und einen
Herausfallverhinderungsabschnitt (51), der konfiguriert ist, um zu verhindern, dass der Basisring (30) und der Abdeckungsabschnitt (50) sich gegenseitig ablösen, formt,
wobei der Herausfallverhinderungsabschnitt (51) zwischen dem Basisring (30) und dem Abdeckungsabschnitt (50) geformt wird.

2. Das Herstellungsverfahren für den Dichtungsring gemäß Anspruch 1,
wobei der Ringanordnungsabschnitt eine vertiefte Passrille (32) einschließt, die von einer Endfläche des Basisrings vertieft ist, und
wobei, in dem Spannringeinstellschritt, der Spannring in der vertieften Passrille in einem Zustand eingestellt wird, in dem eine Höhe des Spannrings niedriger als die eine Endfläche ist.

3. Das Herstellungsverfahren für den Dichtungsring gemäß Anspruch 2,
wobei der Herausfallverhinderungsabschnitt Folgendes umfasst:
einen Verriegelungsfensterabschnitt (36), der in dem Basisring geformt wird und eine Umfangslänge aufweist, der zwischen einer unteren Wand der vertieften Passrille und
einer Endfläche des Basisrings vorliegt und ein Aussparungsabschnitt ist, der eine periphere Wand neben der vertieften Passrille ausspart, wobei die Umfangslänge beim Übergang von der einen Endfläche des Basisrings zu der unteren Wand der vertieften Passrille zunimmt; und
einen Verriegelungsvorsprung (51), der in dem Abdeckungsabschnitt geformt wird und
in den Verriegelungsfensterabschnitt eingepasst wird,
wobei, in dem Dichtungsabschnitt, der Verriegelungsvorsprung, der in den Verriegelungsfensterabschnitt eingepasst werden soll, geformt wird.

4. Das Herstellungsverfahren für den Dichtungsring gemäß Anspruch 2 oder 3,
wobei ein Stoßfugen-Eingriffsabschnitt, geformt aus dem einen Endseiten-Eingriffsabschnitt und dem anderen Endseiten-Eingriffsabschnitt, bereitgestellt wird, um mit beiden Endseiten eines Ringkörperabschnitts des Basisrings kontinuierlich zu sein, wobei der Ringkörperabschnitt ein Abschnitt des Basisrings ist, wo die vertiefte Passrille geformt wird,
wobei die Stoßfuge zwischen dem einen Endseiten-Eingriffsabschnitt und dem anderen Endseiten-Eingriffsabschnitt definiert ist, und
wobei, in dem Hohlraumanordnungsschritt, ein vorspringenden Endseitenabschnitt, geformt auf dem einen Endseiten-Eingriffsabschnitt, in einen anderen vertieften Endseitenabschnitt, geformt in dem anderen Endseiten-Eingriffsabschnitt, eingepasst wird und ein anderer vorspringender Endseitenabschnitt, geformt auf dem anderen Endseiten-Eingriffsabschnitt, in einen vertieften Endseitenabschnitt, geformt in dem einen Endseiten-Eingriffsabschnitt, eingepasst wird.

5. Einen Dichtungsring (10), der einen Kunstharzringkörper (20) aufweist, der aus Kunstharz gefertigt wird und einen Spannring (60) einschließt, der aus Metall in dem Kunstharzringkörper (20) gefertigt wird, wobei der Dichtungsring (10) Folgendes umfasst:
einen Basisring (30), der aus einem Kunstharz gefertigt ist, der den Kunstharzringkörper (20) formt und eine Stoßfuge (47) mit einem überlagerten Abschnitt zwischen einem Endseiten-Eingriffsabschnitt (45) auf einer Endseite in Umfangsrichtung und einem anderen Endseiten-Eingriffsabschnitt (46) auf einer anderen Endseite in der Umfangsrichtung einschließt, wobei der überlagernde Abschnitt mindestens in einer Axialrichtung überlagernd ist,
den aus Metall gefertigten Spannring (60), wobei der Spannring (60) einen Spaltabschnitt (61) in einem Abschnitt aufweist, der dem einen Endseiten-Eingriffsabschnitt (45) und dem anderen Endseiten-Eingriffsabschnitt (46) entspricht, und in einem Ringanordnungsabschnitt des Basisrings angeordnet ist.
**dadurch gekennzeichnet, dass** der Dichtungsring einen Abdeckungsabschnitt (50) umfasst, der den Kunstharzringkörper (20) zusammen mit dem Basisring formt, und
daran gehindert wird, sich von dem Basisring aufgrund der Präsenz eines Herausfallverhinderungsabschnitts (51) zwischen dem Basisring (30) und dem Abdeckungsabschnitt (50) abzulösen.

6. Der Dichtungsring gemäß Anspruch 5,
wobei der Ringanordnungsabschnitt eine vertiefte Passrille (32) einschließt, die von einer Endfläche des Basisrings vertieft ist, und
wobei der Spannring in einem Zustand eingestellt wird, in dem eine Höhe des Spannrings niedriger als die eine Endfläche ist.

7. Der Dichtungsring gemäß Anspruch 6,
wobei der Herausfallverhinderungsabschnitt Folgendes umfasst:
einen Verriegelungsfensterabschnitt (36), der in dem Basisring geformt wird und eine Umfangslänge aufweist, der zwischen einer unteren Wand der vertieften Passrille und
einer Endfläche des Basisrings vorliegt und ein Aussparungsabschnitt ist, der eine periphere Wand neben der vertieften Passrille ausspart, wobei die Umfangslänge beim Übergang von der einen Endfläche des Basisrings zu der unteren Wand der vertieften Passrille zunimmt; und
einen Verriegelungsvorsprung, der in dem Abdeckungsabschnitt geformt wird und in den Verriegelungsfensterabschnitt eingepasst wird.

8. Der Dichtungsring gemäß Anspruch 6 oder 7,
wobei ein Stoßfugen-Eingriffsabschnitt, geformt aus dem einen Endseiten-Eingriffsabschnitt und dem anderen Endseiten-Eingriffsabschnitt, bereitgestellt wird, um mit beiden Endseiten eines Ringkörperabschnitts des Basisrings kontinuierlich zu sein,
wobei der Ringkörperabschnitt ein Abschnitt des Basisrings ist, wobei der Ringkörperabschnitt mit der vertieften Passrille geformt wird,
wobei die Stoßfuge zwischen dem einen Endseiten-Eingriffsabschnitt und dem anderen Endseiten-Eingriffsabschnitt definiert ist,
wobei der eine Endseiten-Eingriffsabschnitt einen vorspringenden Endseitenabschnitt und einen vertieften Endseitenabschnitt einschließt,
wobei der andere Endseiten-Eingriffsabschnitt einen anderen vorspringenden Endseitenabschnitt und einen anderen vertieften Endseitenabschnitt einschließt und wobei der eine vorspringende Endseitenabschnitt in den anderen vertieften Endseitenabschnitt eingepasst wird und der andere vorspringende Endseitenabschnitt in den einen vertieften Endseitenabschnitt eingepasst wird.

## Revendications

1. Procédé de fabrication d'une bague d'étanchéité (10) possédant un corps annulaire en résine (20), composé d'une résine et comprenant une bague de tension (60), réalisée en métal, dans le corps annulaire en résine, le procédé de fabrication comprenant :
une étape de formage d'une bague de base pour le formage d'une bague de base (30) réalisée en résine, et comprenant un joint d'aboutement (47) avec une partie chevauchée entre une partie d'engagement frontale (45) sur une partie frontale de la direction circonférentielle, et une autre partie d'engagement frontale (46) sur une autre partie frontale de la direction circonférentielle, la partie chevauchée étant chevauchante au moins dans une direction axiale ;
une étape d'agencement d'une cavité pour l'agencement de la bague de base (30) dans une cavité (101) d'une matrice (100) ;
une étape de placement de la bague de tension comportant le placement de la bague de tension (60) réalisée en métal dans une partie d'agencement annulaire de la bague de base, la bague de tension (60) possédant une partie d'écartement (61) dans un partie correspondant à l'une partie d'engagement frontale (45) et l'autre partie d'engagement frontale (46) ; et
une étape de scellement du formage d'une partie de couvercle (50) formant le corps annulaire en résine (20) ainsi que la bague de base (30) en versant une résine liquide dans la cavité (101) et une partie de prévention de retombée (51) configurée pour empêcher à la bague de base (30) et à la partie de couvercle (50) de se détacher l'une de l'autre, la partie de prévention de retombée (51) étant formée entre la bague de base (30) et la partie de couvercle (50).

2. Procédé de fabrication de la bague d'étanchéité selon la revendication 1,
la partie d'agencement annulaire comprenant une cannelure de montage évidée (32), évidée depuis une surface terminale de la bague de base, et
la bague de tension étant agencée, à l'étape de placement de la bague de tension, dans la cannelure de montage évidée dans un état dans lequel une hauteur de la bague de tension est inférieure à l'une surface terminale.

3. Procédé de fabrication de la bague d'étanchéité selon la revendication 2,
la partie de prévention de retombée comprenant :
une partie de fenêtre de verrouillage (36), formée dans la bague de base, et comportant une longueur circonférentielle présente entre une paroi inférieure de la cannelure de montage évidée et une surface terminale de la bague de base, et étant une partie découpée découpant une paroi périphérique adjacente à la cannelure de montage évidée, la longueur circonférentielle augmentant de l'une surface terminale de la bague de base vers la paroi inférieure de la cannelure de montage évidée ; et
une saillie de verrouillage (51) agencée dans la partie de couvercle, et montée dans la partie de fenêtre de verrouillage,
dans lequel, à l'étape du scellement, la saillie de verrouillage devant être montée dans la partie de fenêtre de verrouillage est formée.

4. Procédé de fabrication de la bague d'étanchéité selon la revendication 2 ou 3,
une partie d'engagement de joint de point d'appui, composée de l'une partie d'engagement frontale et de l'autre partie d'engagement frontale, étant agencée de façon à être continue avec les deux côtés terminaux d'une partie de corps de bague de la bague de base, la partie de corps de bague étant une partie de la bague de base où est formée la cannelure de montage évidée,
le joint d'appui étant défini entre l'une partie d'engagement frontale et l'autre partie d'engagement frontale, et
à l'étape d'agencement de la cavité, une partie saillante frontale, formée sur l'une partie d'engagement frontale, étant montée dans une autre partie évidée frontale formée dans l'autre partie d'engagement frontale, et une autre partie saillante frontale formée sur l'autre partie d'engagement frontale étant montée dans l'une partie évidée frontale formée dans l'une partie d'engagement frontale.

5. Bague d'étanchéité (10) possédant un corps annulaire en résine (20), composé d'une résine, et comprenant une bague de tension (60), réalisée en métal, dans le corps annulaire en résine (20), la bague d'étanchéité (10) comprenant :
une bague de base (30), réalisée en résine, constituant le corps annulaire en résine (20), et comprenant un joint d'aboutement (47) avec une partie chevauchée entre une partie d'engagement frontale (45) sur un côté frontal de la direction circonférentielle, et une autre partie d'engagement frontale (46) sur un autre côté frontal de la direction circonférentielle, la partie chevauchée étant chevauchant au moins dans une direction axiale,
la bague de tension (60) réalisée en métal, la bague de tension (60) possédant une partie d'écartement (61) dans un partie correspondant à l'une partie d'engagement frontale (45) et l'une autre partie d'engagement frontale (46), et étant agencée dans une partie d'agencement annulaire de la bague de base,
**caractérisée en ce que** la bague d'étanchéité comprend une partie de couvercle (50) formant le corps annulaire en résine (20) ainsi que la bague de base, et se trouve dans l'impossibilité de se détacher de la bague de base en raison de la présence d'une partie de prévention de retombée (51) entre la bague de base (30) et la partie de couvercle (50).

6. Bague d'étanchéité selon la revendication 5,
la partie d'agencement annulaire comprenant une cannelure de montage évidée (32), évidée d'une surface terminale de la bague de base, et
la bague de tension étant agencée dans un état dans lequel une hauteur de la bague de tension est inférieure à l'une surface terminale.

7. Bague d'étanchéité selon la revendication 6,
la partie de prévention de retombée comprenant :
une partie de fenêtre de verrouillage (36), formée dans la bague de base, et possédant une longueur circonférentielle présente entre une paroi inférieure de la cannelure de montage évidée et une surface terminale de la bague de base, et étant une partie évidée évidant une paroi périphérique adjacente à la cannelure de montage évidée, la longueur circonférentielle augmentant de l'une surface terminale de la bague de base à la paroi inférieure de la cannelure de montage évidée ; et
une saillie de verrouillage étant formée dans la partie de couvercle, et montée dans la partie de fenêtre de verrouillage.

8. Bague d'étanchéité selon la revendication 6 ou 7,
une partie d'engagement de joint de point d'appui, composée de l'une partie d'engagement frontale et de l'autre partie d'engagement frontale, étant agencée de façon à être continue avec les deux côtés d'extrémité d'une partie de corps de bague de la bague de base, la partie de corps de bague étant formée avec la cannelure de montage évidée,
le joint d'appui étant défini entre l'une partie d'engagement frontale et l'autre partie d'engagement frontale,
l'une partie d'engagement frontale comprenant une partie saillante frontale et une partie évidée frontale,
l'autre partie d'engagement frontale comprenant une autre partie saillante frontale et une autre partie évidée frontale, et
l'une partie saillante frontale étant montée dans l'autre partie évidée frontale, et l'autre partie saillante frontale étant montée dans l'une partie évidée frontale.
